Europäisches Patentamt

European Patent Office

Office européen des brevets

(19)

(11) Veröffentlichungsnummer : **0 041 124**
**B1**

(12)    # EUROPÄISCHE PATENTSCHRIFT

(45) Veröffentlichungstag der Patentschrift :
**13.06.84**

(21) Anmeldenummer : **81103033.7**

(22) Anmeldetag : **22.04.81**

(51) Int. Cl.³ : **F 16 C 11/04, B 25 H 5/00**

(54) **Gelenk für Führungssäulen an Werkzeugwagen.**

(30) Priorität : **03.06.80 DE 3020946**

(43) Veröffentlichungstag der Anmeldung :
**09.12.81 Patentblatt 81/49**

(45) Bekanntmachung des Hinweises auf die Patenterteilung : **13.06.84 Patentblatt 84/24**

(84) Benannte Vertragsstaaten :
**AT BE CH DE FR GB IT LI NL SE**

(56) Entgegenhaltungen :
**AT-B-   151 858**
**DE-B- 1 290 900**
**DE-B- 2 427 283**
**DE-U- 8 014 771**

(73) Patentinhaber : **Hazet-Werk Hermann Zerver GmbH & Co. KG**
**Güldenwerther Bahnhofstrasse**
**D-5630 Remscheid 1 (DE)**

(72) Erfinder : **Zerver, Hermann Joachim**
**Fasanenweg 19**
**D-5630 Remscheid (DE)**

(74) Vertreter : **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11 (DE)**

**Beschreibung**

Die Erfindung betrifft ein Gelenk für Führungssäulen an Werkzeugwagen, die mindestens einen Zwischenboden und einen Deckel besitzen, welche an zwei Führungssäulen zwischen einer aufeinander liegenden Schließstellung und einer Gebrauchsstellung in der Höhe verschiebbar gelagert sind, wobei die Führungssäulen in der Schließstellung des Werkzeugwagens mittels ihres Gelenkes um etwa 90° in eine parallel zum Deckel verlaufende Lage verschwenkbar sind.

Ein derartiges Gelenk für Führungssäulen an Werkzeugwagen ist aus der DE-B-2 427 283 bekannt. Durch die verschwenkbare Ausführung der Führungssäulen bilden diese in der Schließstellung des Werkzeugwagens einen Traggriff, der gleichzeitig den Werkzeugwagen gegen ein Öffnen sichert, da in der verschwenkten Lage der Führungssäulen der Deckel und die Zwischenböden nicht aus ihrer aufeinander liegenden Schließstellung herausbewegt werden können.

Das aus der DE-B-2 427 283 bekannte Gelenk zum Umlegen der Führungssäulen besteht aus einem quer zur Säule angeordneten Lagerbolzen, der sowohl Teile des festen Säulenstückes als auch des umlegbaren Säulenstückes durchdringt. Da der Querschnitt der Führungssäulen verhältnismäßig klein ist, ergeben sich bei dieser bekannten Bauart des Gelenks kleine Lagerflächen, die bei einer hohen Beanspruchung schnell verschleißen und zu Störungen Anlaß geben. Da auch mit Werkstücken und Werkzeugen gefüllte Werkzeugwagen mittels des Handgriffes transportiert werden, treten regelmäßig sehr hohe Beanspruchungen der bekannten Gelenke auf.

Der Erfindung liegt die Aufgabe zugrunde, ein Gelenk für Führungssäulen an Werkzeugwagen der als bekannt vorausgesetzten Art zu schaffen, das bei einfachster Bauart und hoher Funktionssicherheit ein Umlegen der Führungssäulen ermöglicht, ohne daß Verunreinigungen die Funktion behindern können.

Die Lösung dieser Aufgabenstellung durch die Erfindung ist dadurch gekennzeichnet, daß das Gelenk in an sich bekannter Weise aus zwei Gelenkhälften besteht, die mit unter einem Winkel von 45° zur Längsachse des Gelenks verlaufenden Berührungsflächen aneinander anliegen, um einen rechtwinklig zu den Berührungsflächen angeordneten Bolzen relativ zueinander verdrehbar sind und von denen die untere Gelenkhälfte in ein am Werkzeugwagen befestigtes Standrohr und die obere Gelenkhälfte in das verschwenkbare Führungsrohr der Führungssäulen eingesetzt ist, und daß in dem Führungsrohr der Führungssäulen eine von außen axial verstellbare Druckstange angeordnet ist, die in jeder der beiden Endstellungen des Führungsrohres eine Verriegelung der beiden Gelenkhälften bewirkt.

Aus der AT-B-151 858 ist zwar bereits ein aus zwei Gelenkhälften bestehendes Gelenk bekannt, bei dem die Gelenkhälften auf einer schräg liegenden Berührungsfläche aneinander anliegen und um einen Bolzen relativ zueinander verdrehbar sind, der rechtwinklig zu den Berührungsflächen angeordnet ist ; dieses Gelenk wird jedoch weder für einen Werkzeugwagen verwendet, noch in seinen beiden Endstellungen in der erfindungsgemäßen Weise durch eine Druckstange verriegelt, die in einem der beiden durch das Gelenk miteinander verbundenen Rohre axial verschiebbar angeordnet ist. Auch die aus der DE-B-2 427 283 bekannte, verschwenkbare Führungssäule besitzt kein Verriegelungselement für das Gelenk.

Der erfindungsgemäße Vorschlag ergibt ein Gelenk mit großen Lagerflächen, die auch hohen Belastungen gewachsen sind. Ausserdem ist das Gelenk einfach und preiswert herstellbar und leicht zu montieren. Das Gelenk kann somit bei seinem Einsatz an fahrbaren Werkzeugwagen auch hohe Belastungen aufnehmen, wenn ein mit Werkzeug oder Werkstücken gefüllter Werkzeugwagen mittels der umgelegten Führungssäulen getragen wird, wobei das Gesamtgewicht von den beiden Gelenken aufgenommen werden muß. Durch die von außen axial verstellbaren Druckstangen wird in jeder der beiden Endstellungen der Gelenke eine Verriegelung der beiden Gelenkhälften bewirkt, die insbesondere verhindert, daß die Führungssäulen durch die in ihnen ausgebildeten Gelenke ungewollt abknicken bzw. sich aufrichten. Die Verriegelung erfolgt hierbei mittels einfacher mechanischer Bauteile in beiden Endstellungen des Gelenkes.

Eine besonders günstige Verriegelungsmöglichkeit ergibt sich erfindungsgemäß dadurch, daß in der oberen Gelenkhälfte parallel zum Bolzen ein Druckstück angeordnet ist, das durch die axiale Verstellung der Druckstange in den Endstellungen jeweils in eine Ausnehmung der unteren Gelenkhälfte einrastbar ist. Die Druckstange kann mittels eines Gewindes in der oberen Gelenkhälfte axial verstellbar und an ihrem freien Ende mit einem Drehgriff versehen sein, der die Betätigung der Druckstange erleichtert.

Auf der Zeichnung ist ein Ausführungsbeispiel des erfindungsgemäßen Gelenks dargestellt, und zwar zeigen :

Figur 1 einen Längsschnitt durch ein in einer Führungssäule eingebautes Gelenk in der gestreckten Stellung, (Es folgt jetzt der restliche Text der Figurenaufzählung und die Figuren beschreibung auf den Seiten 5-7 der ursprünglichen Anmeldungsunterlagen).

Figur 2 einen der Fig. 1 entsprechenden Längsschnitt in der umgelegten Stellung,

Figur 3 eine perspektivische Ansicht eines fahrbaren Werkzeugwagens mit umgelegten Führungssäulen,

Figur 4 eine der Fig. 3 entsprechende Darstellung mit einer aufgerichteten Führungssäule und

Figur 5 eine Darstellung gemäß den Fig. 3 und 4 während des Umlegens einer der beiden Führungssäulen.

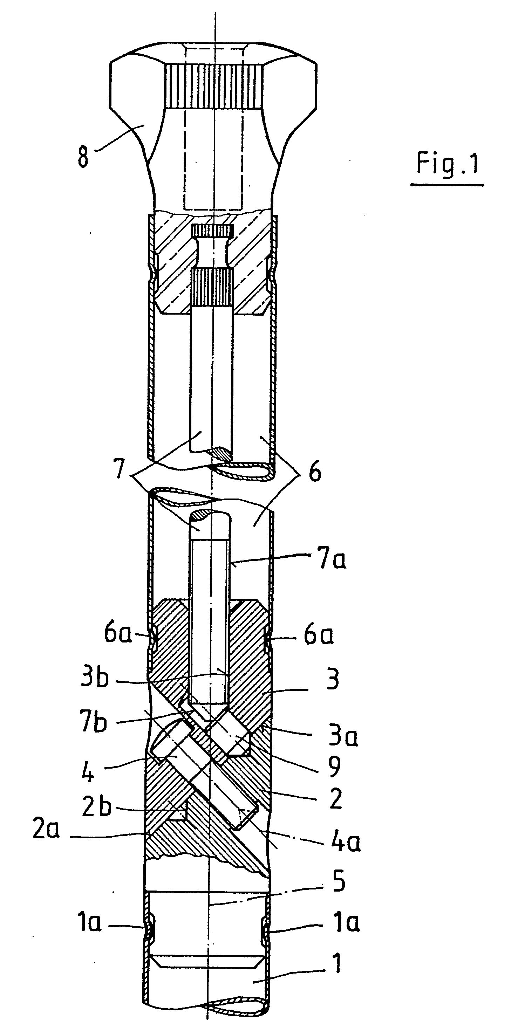

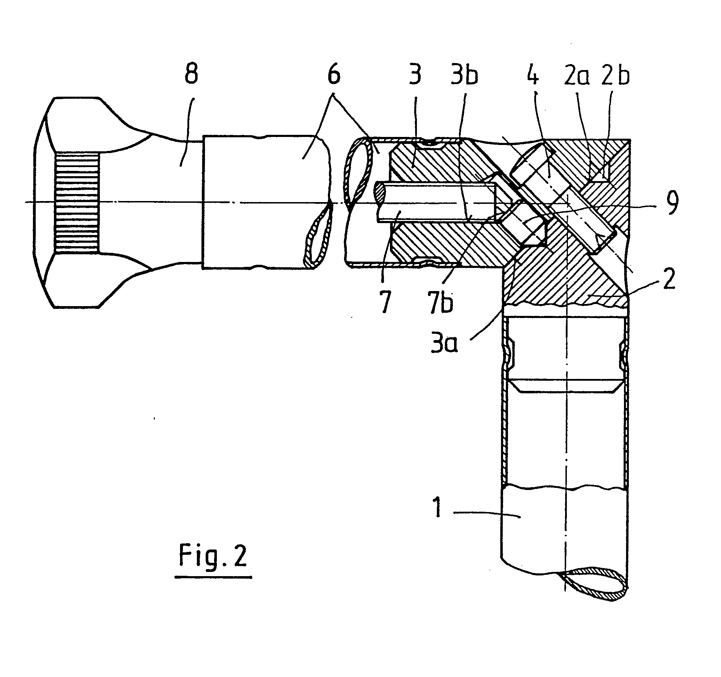

Das anhand eines Ausführungsbeispiel in den Fig. 1 und 2 dargestellte Gelenk ist an einem Standrohr 1 befestigt. Es ragt mit einer unteren Gelenkhälfte 2 in dieses Standrohr 1 hinein und ist am hineinragenden Teil durch in Nuten eingreifende Sicken 1a sowohl in Längsrichtung als auch in Umfangsrichtung des Standrohres 1 festgehalten. Die untere Gelenkhälfte 2 besitzt eine unter 45° zur Längsachse 5 des Standrohres 1 verlaufende Berührungsfläche 2a. An dieser Berührungsfläche 2a liegt eine Berührungsfläche 3a einer oberen Gelenkhälfte 3 an, die ihrerseits an einem umlegbaren Führungsrohr 6 durch Sicken 6a befestigt ist.

Die Verbindung der beiden Gelenkhälften 2 und 3 erfolgt durch einen Bolzen 4, der rechtwinklig zu den Berührungsflächen 2a und 3a angeordnet ist, so daß die obere Gelenkhälfte 3 mit dem Führungsrohr 6 um die Bolzenlängsachse 4a verdrehbar an der Gelenkhälfte 2 gelagert ist. Wie die Darstellungen in Fig. 1 und 2 erkennen lassen, schneidet die Bolzenlängsachse 4a die Längsachse 5 des Standrohres 1 bzw. umlegbaren Führungsrohres 6 in der Ebene der Berührungsfläche 2a und 3a.

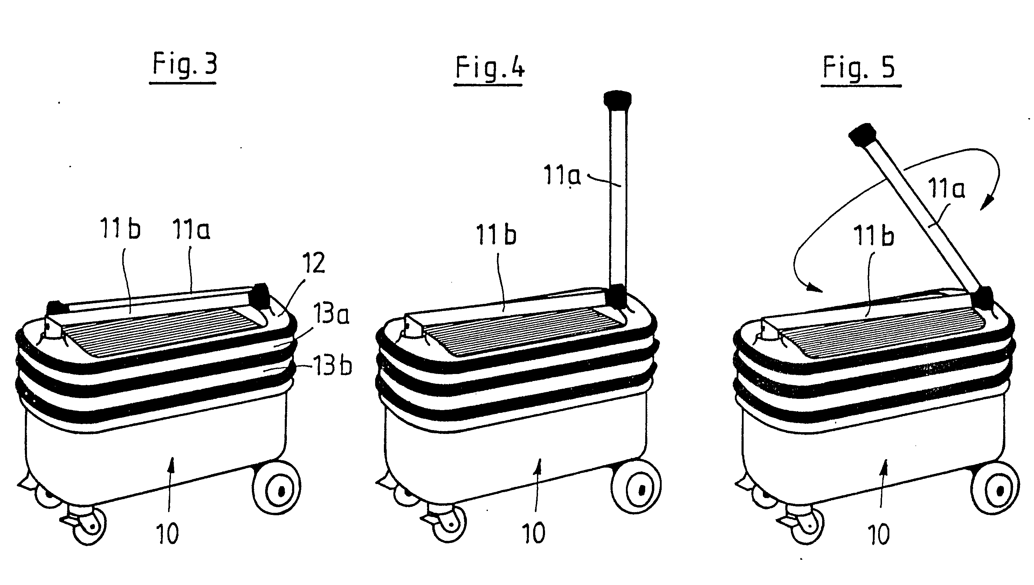

Aufgrund des voranstehend beschriebenen Gelenks kann das Führungsrohr 6 aus der in Fig. 1 dargestellten gestreckten Lage, in der es eine Verlängerung des Standrohres 1 darstellt, in eine in Fig. 2 dargestellte Lage gebracht werden, in der es rechtwinklig zum Standrohr 1 verläuft. Die Überführung in diese Stellung geschieht nicht durch Umlegen in einer Ebene, sondern durch eine Rotationsbewegung um die Bolzenlängsachse 4a, wie dies in Fig. 5 angedeutet ist.

Um die beiden Gelenkhälften 2 und 3 in den beiden Endstellungen arretieren zu können, sind in der unteren Gelenkhälfte 2 zwei Ausnehmungen 2b angeordnet, in die ein durch eine Druckstange 7 mittels eines Drehgriffes 8 betätigbares Druckstück 9 eingreift. Dieses Druckstück 9 wird durch die Spitze 7b der Druckstange 7 in seiner axialen Richtung bewegt, wenn die Druckstange 7 mittels des Drehgriffes 8 axial verlagert wird, und zwar dadurch, daß die mit einem Gewinde 7a versehene Druckstange 7 in einer Gewindebohrung 3b der oberen Gelenkhälfte 3 verdreht wird. Die Fig. 1 zeigt, wie das Druckstück 9 in der gestreckten Stellung des Gelenkes in die obere Ausnehmung 2b der unteren Gelenkhälfte 2 eingreift und in dieser Eingreifstellung durch die Spitze 7b der Druckstange 7 gehalten wird. In Fig. 2 ist zu erkennen, daß in der umgelegten Stellung des Führungsrohres 6 das Druckstück 9 in die untere Ausnehmung 2b eingreift.

Der in den Fig. 3 bis 5 schematisch dargestellte Werkzeugwagen 10 ist mit zwei Führungssäulen 11a und 11b versehen, deren untere Teile dem Standrohr 1 entsprechen und am kastenförmigen Boden des Werkzeugwagens 10 befestigt sind. An den Führungssäulen 11a und 11b sind ein Deckel 12 sowie zwei Zwischenböden 13a und 13b verschiebbar geführt, und zwar wenn sich die Führungssäulen 11a und 11b in ihrer gestreckten Lage befinden. In dieser auf der Zeichnung nicht dargestellten Lage der Führungssäulen 11a und 11b können der Deckel 12 und die Zwischenböden 13a und 13b angehoben werden. Der Deckel 12 wird in der obersten Stellung an den Führungssäulen 11a und 11b arretiert, so daß sowohl die Zwischenböden 13a und 13b als auch der kastenförmige Boden des Werkzeugwagens 11 von allen Seiten zugänglich sind.

Wenn sich der Deckel 12 und die Zwischenböden 13a und 13b in der abgesenkten Schließstellung gemäß Fig. 3 befinden, können die dem lung gemäß Fig. 3 befinden, können die dem umlegbaren Führungsrohr 6 in den Fig. 1 und 2 entsprechenden Oberteile der Führungssäulen 11a und 11b parallel zum Deckel 12 umgelegt werden. In dieser Stellung gemäß Fig. 3 dienen die umgelegten Führungssäulen 11a und 11b als Traggriff für den Werkzeugwagen 10.

Die Fig. 5 zeigt schließlich, daß das Umlegen bzw. Aufrichten einer Führungssäule 11a durch eine Rotationsbewegung erfolgt, die in Fig. 5 durch einen Doppelpfeil angedeutet wird. Selbstverständlich ist es möglich, durch geeignete Verschlußmechanismen dafür zu sorgen, daß die gemäß Fig. 3 umgelegten Führungssäulen 11a und 11b nicht aufgerichtet werden können, sofern nicht eine Aufhebung des Verschlusses mittels des hierfür vorgesehenen Schlüssels erfolgt ist.

Bezugsziffernliste

1   Standrohr
1a  Sicke
2   Untere Gelenkhälfte
2a  Berührungsfläche
2b  Ausnehmung
3   Obere Gelenkhälfte
3a  Berührungsfläche
3b  Gewindebohrung
4   Bolzen
4a  Bolzenlängsachse
5   Längsachse
6   Führungsrohr
7   Druckstange
7a  Gewinde
7b  Spitze
8   Drehgriff
9   Druckstück
10  Werkzeugwagen
11a Führungssäule
11b Führungssäule
12  Deckel
13a Zwischenboden
13b Zwischenboden

**Ansprüche**

1. Gelenk für Führungssäulen an Werkzeugwagen, die mindestens einen Zwischenboden und einen Deckel besitzen, welche an zwei Führungssäulen zwischen einer aufeinanderliegenden Schließstellung und einer Gebrauchsstellung in der Höhe verschiebbar gelagert sind, wobei die Führungssäulen in der Schließstellung des Werkzeugwagens mittels ihres Gelenkes um etwa 90° in eine parallel zum Deckel verlaufende Lage verschwenkbar sind, dadurch gekennzeichnet, daß das Gelenk in an sich bekannter Weise aus zwei Gelenkhälften (2, 3) besteht, die mit unter einem Winkel von 45° zur Längsachse (5) des Gelenks verlaufenden Berührungsflächen (2a, 3a) aneinander anliegen, um einen rechtwinklig zu den Berührungsflächen (2a, 3a) angeordneten Bolzen (4) relativ zueinander verdrehbar sind und von denen die untere Gelenkhälfte (2) in ein am Werkzeugwagen (10) befestigtes Standrohr (1) und die obere Gelenkhälfte (3) in das verschwenkbare Führungsrohr (6) der Führungssäulen (11a, 11b) eingesetzt ist, und daß in dem Führungsrohr (6) der Führungssäulen (11a, 11b) eine von außen axial verstellbare Druckstange (7) angeordnet ist, die in jeder der beiden Endstellungen des Führungsrohres (6) eine Verriegelung der beiden Gelenkhälften (2, 3) bewirkt.

2. Gelenk nach Anspruch 1, dadurch gekennzeichnet, daß in der oberen Gelenkhälfte (3) parallel zum Bolzen (4) ein Druckstück (9) angeordnet ist, das durch die axiale Verstellung der Druckstange (7) in den Endstellungen jeweils in eine Ausnehmung (2b) der unteren Gelenkhälfte (2) einrastbar ist.

3. Gelenk nach Anspruch 1 und 2, dadurch gekennzeichnet, daß die Druckstange (7) mittels eines Gewindes (7a) in der oberen Gelenkhälfte (3) axial verstellbar und an ihrem freien Ende mit einem Drehgriff (8) versehen ist.

**Claims**

1. A joint for a column sleeve on a tool cart, which has at least one intermediate floor and a lid, which are situated on two column sleeves movable between locked positions lying adjacent to one another and an operative vertical position, wherein the column sleeves of the tool cart are pivotable into the locked position by means of their joints through about 90 degrees in a plane extending parallel to the lid, characterised in that the joint consists in a manner known per se of two joint halves (2, 3), which adjoin one another with contact surfaces (2a, 3a) extending at an angle of 45 degrees to the longitudinal axis of the joint, are rotatable relative to one another about a bolt (4) disposed at a right angle to the contact surfaces (2a, 3a), and the lower joint half (2) is positioned in a vertical pipe (1) secured to the tool cart (10) and the upper joint half (3) is positioned in the pivotable guide tube (6) of the column sleeve (11a, 11b), and in that in the guide tube (6) of the column sleeve (11a, 11b) there is disposed a plunger (7) movable along its own axis, which in each of both end positions of the guide tube (6) acts as a locking mechanism for both joint halves (2, 3).

2. A joint according to claim 1, characterised in that there is disposed in the upper joint half parallel to the bolt (4) a contact piece (9), which is engagable in a recess (2b) in the lower joint half (2) by the axial movement of the plunger (7) in the present end position.

3. A joint according to claim 1 and 2, characterised in that the plunger (7) is axially movable by means of a thread (7a) in the upper joint half (3) and is provided on its free end with a control grip (8).

**Revendications**

1. Articulation pour colonnes de guidage de chariots à outils qui comportent au moins un fond intermédiaire et un couvercle et qui sont montés pour coulisser en hauteur sur deux colonnes de guidage entre une position de fermeture et une position d'utilisation situées l'une au-dessus de l'autre, les colonnes de guidage pouvant, dans la position de fermeture du chariot à outils, pivoter de 90° environ au moyen de leur articulation dans une position s'étendant parallèlement au couvercle, caractérisée en ce que l'articulation est constituée de façon en soi connue par deux moitiés d'articulation (2, 3), qui reposent l'une sur l'autre par deux faces de contact (2a, 3a) s'étendant sous un angle de 45° avec l'axe longitudinal (5) de l'articulation, qui peuvent tourner l'une par rapport à l'autre autour d'un boulon (4) disposé à angle droit par rapport aux faces de contact (2a, 3a) et parmi lesquelles la moitié d'articulation inférieure (2) est introduite dans un tube vertical (1) fixé sur le chariot à outils (10) et la moitié d'articulation supérieure (3) est introduite dans le tube de guidage pivotant (6) des colonnes de guidage (11a, 11b), et en ce qu'une tige de compression (7), déplaçable en direction axiale depuis l'extérieur, est disposée dans le tube de guidage (6) des colonnes de guidage (11a, 11b), tige qui provoque un verrouillage des deux moitiés d'articulation dans chacune des deux positions d'extrémité du tube de guidage (6).

2. Articulation selon la revendication 1, caractérisée en ce qu'une pièce de compression (9) est disposée dans la moitié d'articulation supérieure (3) parallèlement au boulon (4), pièce qui, par le déplacement axial de la tige de compression (7), peut être encliquetée dans un évidement (2b) de la moitié d'articulation inférieure (2) dans chacune des positions d'extrémité.

3. Articulation selon les revendications 1 et 2, caractérisée en ce que la tige de compression (7) peut être déplacée en direction axiale dans la moitié d'articulation supérieure (3) au moyen d'un filetage (7a) et est munie d'une poignée tournante (8) à son extrémité libre.

Fig. 1

Fig. 2

Fig. 5

Fig.4

Fig.3